# EUROPEAN PATENT APPLICATION

(11) **EP 3 295 787 A1**
(43) Date of publication of application: **21.03.2018**
(21) Application number: 16020333.7
(22) Date of filing: 14.09.2016
(51) Int. Cl.: A01G 1/00, C05D 3/02, C05B 17/00, C05D 5/00, C05G 3/00, A01N 59/06

(54) **METHOD FOR THE REGENERATION AND MAINTENANCE OF GRASS AREAS**

(71) Applicant: Linde Aktiengesellschaft, 80331 München (DE)
(72) Inventor: Krabbendam, Peter, 2046 AA Haarlem (NL); van de Ven, Joost, 5235 DC 's-Hertogenbosch (NL)
(74) Representative: Gellner, Bernd

(57) **Abstract**

The invention relates to a method for the regeneration and maintenance of turf or lawn, wherein the pH in the soil and the turf or lawn is stabilized by buffering the pH in the soil by applying a buffer solution to the turf or lawn.

## Description

The invention pertains to a method for the regeneration and maintenance of grass areas.

Grass, in particular turf or lawn for sports purposes needs an intense maintenance due to the load of stress it is subjected to. There are some specialties of turf or lawn or rather of the plants making up the turf or lawn. On one hand the grass needs a beneficial level of temperature for growing, on the other hand a beneficial grade of fertilization is indispensable.

From EP 0 561 193 A2 a method and a device for the increasing of the growth rate of the grass plants is known. This device uses a covering that covers the grass nearly to a full extent, sources of light and two ventilators to introduce carbon dioxide. Under the cover the grass is illuminated for at least eight to twelve of 24 hours. The atmosphere the grass is subjected to is held in motion constantly or in intervals by the fans or exchanged. The amount of carbon dioxide that is consumed by the grass plants is added to the atmosphere under the cover by the device. By this method and this device it should be possible that grass can grow during any season.

From EP 1 269 815 A a device is known for the aeration of turf or lawn. In this method a gas is led to the grass plants through a gas pipe which extends over the turf area. The gas pipe or gas duct has a closed end and an open end wherein the open end is connected to a pressurizing device. The gas pipe or gas duct comprises outlets which are directed at the turf or lawn. In an advantageous embodiment the device may have sensors for different parameters such as ambient temperature, ambient humidity, lawn temperature, lawn humidity, gas entry temperature, gas outlet temperature, gas humidity, percentage of carbon dioxide as well as percentage of fertilizer. This data is directed to a control unit which controls the pressurizing device and/or the supply of steam and/or carbon dioxide and/or fertilizer and/or a heating device. This device can be mobile with a chassis. In such a mobile device the chassis has a drive with a driving chain which is led in a drive channel, wherein the drive channel is located beneath the level of the lawn or turf.

A method for increasing the grow rate and regeneration of turf or lawn is known from DE 10 2006 017 813 A1, wherein the turf or lawn is at least partially shielded by a cover, wherein carbon dioxide is led into the space under the cover and wherein the space under the cover has an illuminating device. The contents of DE 10 2006 017 813 A1 is herewith included by reference.

It can be noticed that in existing lawn or turf areas, in particular existing turfs or lawns which are used for sports, whole areas or parts of the areas do not maintain their quality although they are attended in a common way.

It is an object of the present invention to show a method for the regeneration and maintenance of turf and lawn with which turf and lawn receive further optimized conditions. A further advance of a neutral grass plant is that the fertilizer uptake by the plant is improved as well.

The object is reached by a method according to claim 1.

Advantageous implementations are characterized in the sub-claims.

The inventors found, that the poor quality of some turf or lawn especially in soccer stadiums is caused by a pH which is too low or too high. Especially in more closed soccer stadiums where less sunlight is exerted to the grass, in some areas the pH is low, which means beyond pH 5,5. Even low pH values of 4,0 are measured. And high values of around 8,0

It has been evaluated that the low value is mostly caused by microbiological processes where for example fatty acids (as for example acidic acids or organic acids) are formed, which decreases the pH in the soil. At a pH of under 6 the growing of the grass is inhibited so the grass quality and quantity is getting worse. High values are mostly caused by watering the pitch with water that has a too high pH value.

According to the invention, to increase the pH or lower the pH and especially to stabilize a neutral pH to a value of about 6,5 in the soil a buffer solution is added to the spraying water or a buffer solution is locally sprayed onto the grass and the soil, where the pH is too low or too high.

According to the invention it has been found that it is advantageous to buffer the soil of a turf or lawn in stadiums, apparently using CO₂. It is especially advantageous if it is combined with an alkaline solution. It is further advantageous if a CO₂ buffer is used.

As the alkaline solution it is advantageous to use an MgCO₃. Mg is important for the growth (as it is part of the chlorophyll).

MgCO₃ dissolves in water according to the following equation:

2MgCO₃ x 3H₂O -> Mg(OH)₂ x 2H₂O + CO₂

Carbon dioxide dissolves in water according to the following equations:

CO₂+ H₂O ↔ H₂CO₃ ↔ HCO₃⁻ + H⁺

HCO₃- + OH- ↔ H₂O + CO₃²⁻

[HCO₃] + 2[CO₃²⁻] + [OH⁻] - [H⁺]

Due to the solubility of MgCO₃ in water, which is not very high in addition to the buffer solution and/or in the spraying water CO₂ can be dissolved. The carbon dioxide reacts with the water to give a weak acid so that in addition no pH shock at the addition point is achieved.

In addition it is possible to use another buffering solution, which is the phosphate buffering solution according to the equation:

H₃PO₄ + H₂O ↔ H₂PO₄⁻ + H₃O⁺

pKa,1 = 2,0

H₂PO₄- + H₂O ↔ HPO₄2- + H₃O⁺

pKa,2 = 7,2

H₃PO₄²⁻ + H₂O ↔ PO₄³⁻ + H₃O⁺

pKa,3 = 12,3

As phosphates are fertilizers it would be helpful to balance the fertilizers which are added to the soil or to the grass, i.e. to lower the respective phosphate or Mg content in the used fertilizers, so that no over fertilization with these elements is reached.

It is an advantage of the invention that it is possible to raise the pH in lower pH areas in the soil and to stabilize that useful pH in the soil by a buffering system.

The optimum pH (6,5), which is almost near neutral, increases the growing of the grass and the roots in the soil.

The local low pH by bacterial growth (fatty acids forming) is prevented by the buffer of the CO₂/HCO₃⁻/CO₃²⁻ and the phosphate buffer system.

By using MgCO₃²⁻ the Mg is important for the growth, wherein the CO₃²⁻ is useful for the buffering, wherein the phosphate buffering is useful, too, as its buffers and phosphates are fertilizing agents.

The pH of the solution can be controlled by the addition of CO₂ to the spraying water or to the solution.

## Claims

1. Method for the regeneration and maintenance of turf or lawn, wherein the pH in the soil and the turf or lawn is stabilized by buffering the pH in the soil by applying a buffer solution to the turf or lawn.

2. Method according to claim 1, wherein the soil of a turf or lawn, in particular in stadiums, is buffered using carbon dioxide.

3. Method according to claim 1 or 2, **characterized in that** the buffer solution is a carbonate buffer solution or phosphate buffer solution or a mixture of both.

4. Method according to one of the preceding claims, **characterized in that** the buffer solution is an alkaline solution based on MgCO₃.

5. Method according to any of the preceding claims, **characterized in that** additional carbon dioxide is dissolved in the buffer solution.

6. Method according to any of the preceding claims, **characterized in that**, if a phosphate buffer solution is used, the fertilizers that are added to the soil or to the turf or lawn are balanced so that the respective phosphate or Mg content in the used fertilizer is lowered so as not to over fertilize with these fertilizing agents.
